# EUROPEAN PATENT SPECIFICATION

(11) **EP 4 294 164 B1**
(45) Date of publication and mention of the grant of the patent: **06.05.2026**
(21) Application number: 22705917.7
(22) Date of filing: 11.02.2022
(51) Int. Cl.: A01B 69/04, A01K 29/00

(54) **CONTROL ARRANGEMENT AND METHOD FOR CONTROLLING OPERATION OF MOBILE AGRICULTURAL DEVICES**
STEUERANORDNUNG UND VERFAHREN ZUR STEUERUNG DES BETRIEBS VON MOBILEN LANDWIRTSCHAFTLICHEN VORRICHTUNGEN
AGENCEMENT DE COMMANDE ET PROCÉDÉ DE COMMANDE DU FONCTIONNEMENT DE DISPOSITIFS AGRICOLES MOBILES

(30) Priority: 18.02.2021 SE 2150177
(43) Date of publication of application: 27.12.2023
(73) Proprietor: DeLaval Holding AB, 147 21 Tumba (SE)
(72) Inventor: NILSSON, Mats, 147 21 Tumba (SE)
(74) Representative: DeLaval International AB
(86) International application number: PCT/SE2022/050147
(87) International publication number: WO 2022/177493

(56) References cited:
- EP-A1- 2 879 485
- EP-A1- 2 955 998
- EP-A1- 3 494 779
- WO-A1-2016/023716
- US-A1- 2011 298 619
- US-A1- 2019 307 106
- US-A1- 2021 000 065

## Description

### Technical field

The present disclosure generally relates to farming and in particular to a control arrangement for controlling operation of mobile agricultural devices in a livestock area. The disclosure also relates to a corresponding method and to a computer program for performing the method.

### Background

In order to save time and effort for farmers, autonomous agricultural equipment is commonly used to take care of different tasks that needs to be performed in a livestock area. For example, autonomous agricultural robots may be programmed to autonomously perform tasks like cleaning, delivering feed at a feed table or pushing and mixing feed that has been spread out.

Even though many tasks are performed by robots, livestock management is still a complicated task, as animal behaviour is not always foreseeable. To facilitate livestock management different systems have been proposed. For example, EP2955998A1 proposes a method and system for localising and displaying positions of animals and autonomously mobile objects, which helps a user in managing an animal housing and the autonomously mobile objects therein.

In addition, solutions have been proposed which mitigate risk of accidents when operating autonomous agricultural equipment. For example, WO2018122199 proposes a system that triggers an accident-avoidance measure when a distance between a geographical position of a locational device and an agricultural structure is smaller than a threshold limit.

Although systems like the ones presented above facilitate livestock management, it would still be desired to further enhance livestock management.

### Summary

It is an object of the disclosure to alleviate at least some of the drawbacks with the prior art. Thus, it is an object to provide livestock management solutions that are even more efficient and safe. The techniques proposed herein achieves these objects by taking an automatic livestock management to a further level by using positioning information provided by a real-time location system.

The invention relates to a control arrangement according to claim 1, configured to obtain from the real-time location system, positions of individual animals and of each one of a plurality of individual mobile agricultural devices located in the livestock area and to automatically control operation of one or more of the mobile agricultural devices, based on the obtained positions of each one of the plurality of the individual mobile agricultural devices and of the individual animals. Thereby, mobile agricultural devices can be operated optimally and safely with regard to the positions of the animals (and staff). The control arrangement is hereby configured to automatically control the operation of a plurality of mobile agricultural devices, based on the obtained positions of the individual mobile agricultural devices and of the individual animals. An enhanced operational efficiency or optimal performance and safety in the automatic control of several mobile agricultural devices is thereby achieved on the basis of the obtained positions on both the mobile agricultural devices and the animals. The control arrangement is typically provided by a (central) control unit, but the control arrangement may also be distributed among several units, such as a control arrangement further including a livestock management server, control circuitry located on the mobile agricultural devices and/or control circuitry of user devices. Hence, the control arrangement should be seen as a functional control unit that may be included in one control unit or distributed in several units.

In an embodiment, the control arrangement is configured to determine, based on the obtained positions of the individual animals and/or individual mobile agricultural devices, a need to operate the mobile agricultural devices at certain times and/or in certain places in the livestock area to control the operation in accordance with the determined need. Thereby, agricultural tasks can be automatically performed when and where it is needed as it is based on where the animals and/or the agricultural devices are located.

In a further embodiment, the control arrangement is configured to determine based on the obtained positions of the individual animals and/or individual mobile agricultural devices, appropriate times and/or places when the one or more individual mobile agricultural devices can operate safely and/or undisturbed in the livestock area and to control the operation in accordance with the appropriate times and/or places. Thereby, agricultural tasks can be performed uninterruptedly without risking safety or disturbing animals.

In yet a further embodiment, the control arrangement is configured to select one or more agricultural mobile devices for performing a certain task based on the obtained positions of the one or more individual mobile agricultural devices and/or of the individual animals. Thereby, the agricultural mobile devices that is most suitably positioned is used to perform the task.

In some embodiments, the control arrangement is configured to calculate, based on the obtained positions of individual animals, a density of animals in a sub-area of the livestock area and to control the operation of the one or more of the mobile agricultural devices based on the calculated density. By considering animal density the efficiency and safety in performing tasks (such as feeding or cleaning tasks) is further improved, since the density (number) of animals in the sub-area typically indicates an increased need for a specific task in that sub-area. Animal density can hereby be used to determine when and/or how often the task is executed by the mobile agricultural device in the sub-area.

In some embodiments, the control arrangement is configured to control the operation of the one or more of the mobile agricultural devices based one or more relative distances between the one or more individual mobile agricultural devices and of the individual animals. By considering relative distances the efficiency and safety is further improved, since the path and/or speed of the mobile agricultural device can be controlled in relation to its distance to the animal(s).

In some embodiments, the control arrangement is configured to store the obtained positions of the individual mobile agricultural devices and/or animals in a data storage and to control the operation based on historical positions of the individual mobile agricultural devices and/or individual animals. Thereby, both real-time and historical positions may be utilised, whereby efficiency and safety can be further enhanced.

In some embodiments, the control arrangement is configured to determine a schedule or speed for operating the mobile agricultural devices based on the obtained positions of the individual mobile agricultural devices and/or animals and to control the operation based on the determined schedule and/or speed. Thereby, operation can efficiently be scheduled/adapted to achieve further efficiency and security.

In some embodiments, the control arrangement is configured to calculate zones and/or paths for operating the mobile agricultural devices based on the obtained positions of the individual mobile agricultural devices and/or animals and to control the operation based on the calculated zones and/or paths. Thereby, operation can efficiently be performed in the calculated (suitable) zones and/or paths for further efficiency and safety in the operation of the mobile agricultural devices.

In some embodiments, the calculated zones comprise temporarily unallowed zones where one or more individual mobile agricultural devices are temporarily unallowed to drive and/or allowed zones. By dynamically creating and/or adjusting virtual gates into or out of zones and tracks, efficiency and security can be improved.

In some embodiments, the control arrangement is configured to obtain information indicating whether passages in the livestock area are free or blocked and wherein the control arrangement is configured to control the operation based on whether the passages are free or blocked. Thereby, the operation of the mobile agricultural devices can be adapted to achieve further efficiency.

In some embodiments, the control arrangement is configured to assign tasks to humans and to provide information about assigned tasks via a user interface. In this way, tasks that cannot be automatically performed by the mobile agricultural devices can also be automatically assigned to a human.

In some embodiments, the control arrangement is configured to obtain, from the RTLS, positions of individual humans in the livestock area and to control the operation based on the obtained positions of the individual humans. Thereby, the operation of the mobile agricultural devices is based on the positions of humans in the livestock area for improved safety and tasks can be assigned/performed in a more efficient way.

In some embodiments, the control arrangement is configured to obtain information about tasks performed by individual humans and to evaluate execution of the tasks based on positions of the individual humans. Thereby, execution of tasks performed by humans can be verified and evaluated.

In some embodiments, the control arrangement is configured to obtain information about tasks performed by the one or more mobile agricultural device and to evaluate execution of the tasks based on the obtained positions of the one or more individual mobile agricultural devices. Thereby, execution of tasks performed by mobile agricultural device can be verified and evaluated.

In some embodiments, the control arrangement is configured to obtain information about expected movement of the mobile agricultural devices and/or the individual humans while performing the tasks and to evaluate the tasks by comparing the obtained positions of the one or more individual mobile agricultural devices and/or of the individual humans with the expected movement. In this way, execution of tasks performed by mobile agricultural device or human can be verified in a simple way.

According to a second aspect, the disclosure relates to a method, for controlling operation of mobile agricultural devices in a livestock area, wherein a real-time location system, RTLS, is arranged in the livestock area to track locations of objects located in the livestock area in real-time. The method comprises obtaining, from the RTLS, positions of the individual animals and of the individual mobile agricultural devices in the livestock area and automatically controlling operation of one or more of the mobile agricultural devices, based on the obtained positions of the one or more individual mobile agricultural devices and of the individual animals.

In some embodiments, the method comprises storing the determined one or more positions of the individual mobile agricultural devices in a data storage.

In some embodiments, the method comprises selecting one or more agricultural mobile devices for performing a certain task based on the obtained positions of the one or more individual mobile agricultural devices and/or of the individual animals.

According to a third aspect, the disclosure relates to a computer program comprising instructions which, when the program is executed by a computer, cause the computer to carry out the method according to the first aspect.

According to a fourth aspect, the disclosure relates to a computer-readable medium comprising instructions which, when executed by a computer, cause the computer to carry out the method according to the first aspect.

According to a fifth aspect, the disclosure relates to a livestock management system comprising an RTLS configured to be arranged in a livestock area to track locations of objects located in the livestock area in real-time and the control arrangement according to the first aspect.

### Brief description of the drawings

Fig. 1 illustrates a top view of an example livestock area.
Fig. 2 is a schematic illustration of a real time location system arranged in a livestock area.
Fig. 3 illustrates a livestock management system.
Figs. 4A and 4B are flowcharts of the method for controlling operation of mobile agricultural devices in a livestock area.
Fig. 5 illustrates a control arrangement for controlling operation of mobile agricultural devices in a livestock area.
Fig. 6 illustrates the control arrangement in further detail.

### Detailed description

As livestock systems (for example for dairy, beef, sheep and pigs) become more intensive, producers typically need to manage livestock on a larger scale, while labour availability, skill and resources are often limited. For this purpose, many farms use Real-Time Location Systems, RTLS, for individually identifying and tracking the movements of tagged animals in three dimensions within a monitoring zone.

This disclosure is based on the insight that data provided by a RTLS may also be used to improve performance and add functionality to existing products. In other words, data provided by a RTLS may be used to enhance livestock management. For example, information provided by the RTLS may be used to monitor and guide a manure robot or a feed pusher. It is also possible to combine information from different equipment (e.g. information from feed or manure robots in combination). In other words, this disclosure proposes a high-level system for livestock management that uses data provided by the RTLS for monitoring and decision making.

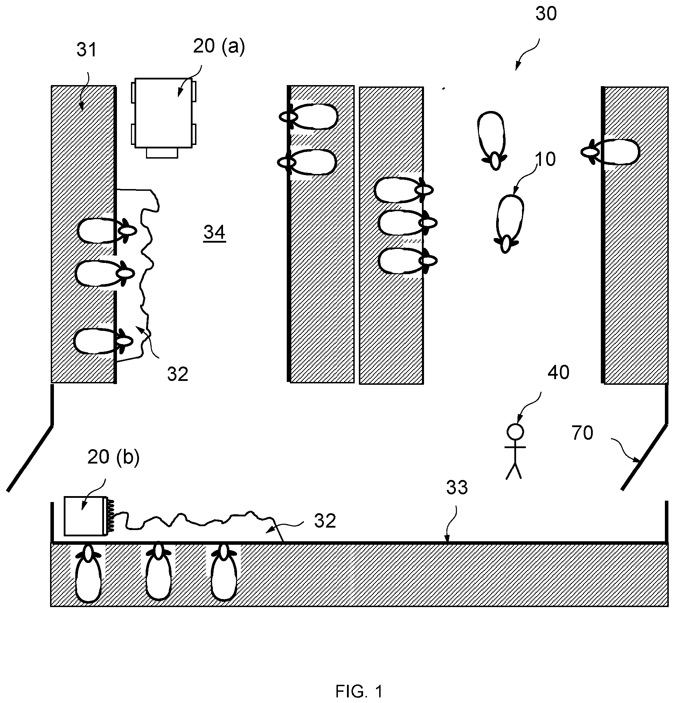

Fig. 1 illustrates a top view of an example livestock area 30 where the proposed control arrangement may be implemented. The livestock area 30 comprises a resting area 31, where the animals 10 can rest. Alleys 34, where animals 10 can move around are arranged between the resting areas 31. During feeding, feed is deposited at a feeding place 32 (also called feeding table), which is for example an area next to the resting area 31, such that the animals 10 can reach the feed through a feeding fence 33. In the example of Fig. 1 two mobile agricultural devices 20 are operated to feed the animals. More specifically a feed wagon 20 (a) is operated to distribute feed and a feed pusher 20 (b) is operated to push feed back towards the animals 10 so that they can reach it through the feeding fence 33.

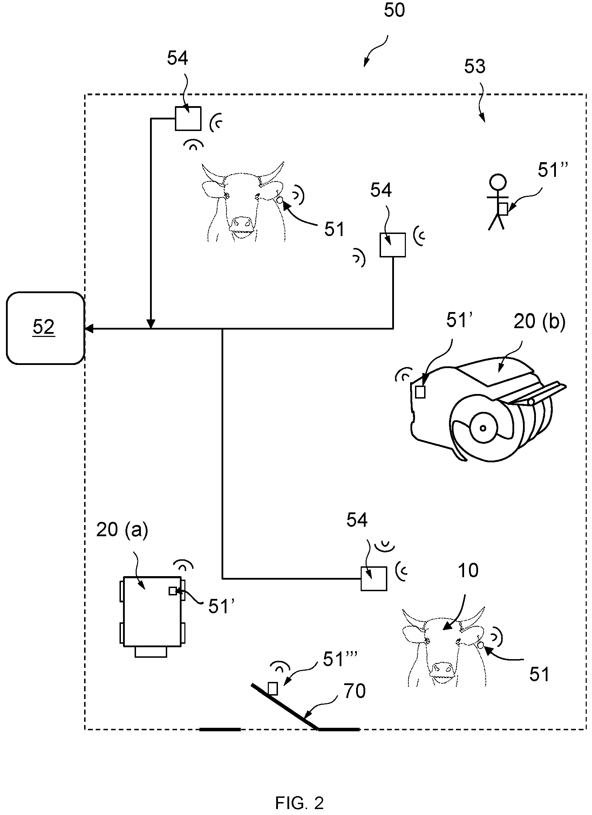

Fig. 2 illustrates an example of an RTLS 50 that may be used by the proposed method and control arrangement 100. An RTLS 50 is a known type of system used to track the location of objects, such as animals 10, in real time using tags 51 (preferably active tags, but may also include passive tags) attached to objects located in a livestock area 30 as the one in Fig. 1. Tags may be attached to or carried by different objects, such as animals 10, mobile agricultural devices 20, humans 40 and stationary equipment 70 (e.g. gates or bars). In Fig. 2 tags 51 carried by animals are denoted 51, tags attached to mobile agricultural devices are denoted 51', tags attached to or carried by humans are denoted 51" and tags attached to stationary equipment is denoted 51‴.

The RTLS also comprises reader antennas/readers 54 that receive wireless signals from these tags 51, 51', 51", 51‴ to determine their locations. The wireless communication includes, but is not limited to, a cellular radio, a WiFi radio, a Bluetooth radio, a Bluetooth low energy (BLE) radio, UltraWideBand (UWB) radio or any other appropriate radio frequency communication protocol. The particular number and placement of the readers 54 will depend on the size and shape of a tracking zone 53 of the livestock area/farm being monitored.

In some embodiments the tags 51, 51', 51", 51‴ also comprise orientation sensors configured to generate data indicative of the orientation of the sensor, such as a three-axis accelerometer assembly or a gyro assembly. The tags 51, 51', 51", 51‴ may also include other sensors or components, such as object monitoring sensors. The object monitoring sensors may comprise a thermometer, a heart rate monitor, a vibration sensor, a camera, a microphone, or any other appropriate device.

When the RTLS 50 is in use, the location of each tag 51, 51', 51", 51‴ is tracked in real-time within the tracking zone 53 using multi-lateration techniques known in the art, for example using Time Difference of Arrival (TDOA) and Received Signal Strength Indicator (RSSI) techniques. To this end, data from the readers 54 is supplied to a control system 52 that determines, in real-time basis, the instantaneous position of each tag 51, 51', 51", 51‴ in the tracking zone 53. The control system 52 may be implemented as a computer-based system that is capable of executing computer applications (for example software programs). An exemplary application of the control system 52 includes a real-time location function, configured to determine a two- or three-dimensional position of the tag 51, 51', 51", 51‴ within a tracking zone 53 (e.g. corresponding to the livestock area 30). The control system 52 may use triangulation of data provided by three or more readers 54 to determine the location of the tags 51, 51', 51", 51‴.

In some embodiments, the control system 52 is configured to determine a movement of the tags 51, 51', 51", 51‴ including for example direction of movement and amount of movement. In some embodiments, the control system 52 is configured to determine an orientation of the tag 51, 51', 51", 51‴. The control system 52 can also be configured to discriminate between different activities of an animal 10 wearing the tag 51 based upon the location, movement and orientation of the animal's tag within the monitoring zone. As an example, different activities may be determined, such as whether the animal is sleeping, eating, resting, standing or walking. The monitoring function, any other applications and an operating system executed by the control system 52 may be stored on a non-transitory computer readable medium, such as a memory.

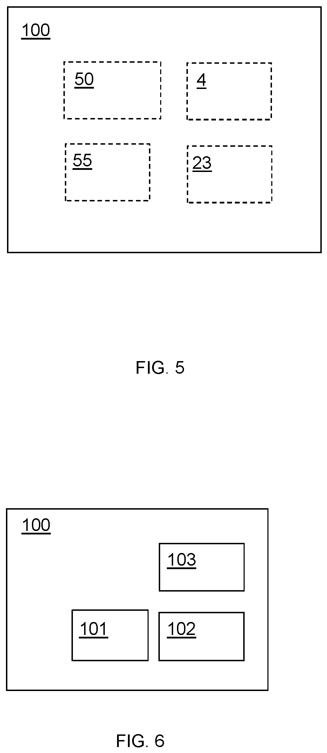

The control system 52 may also have one or more communications interfaces. The communications interfaces may include for example, a modem and/or a network interface card. The communications interfaces enable the control system 52 to send and receive data to and from other computing devices such as the proposed control arrangement 100 (see Figs. 5-6). The communications interface further enables the control system 52 to receive messages and data from the readers 54 or from the tags 51, 51', 51", 51‴ either directly or via another communications network. The communications network may be any network platform and may include multiple network platforms. Exemplary network platforms include, but are not limited to, a WiFi network, a cellular network, etc.

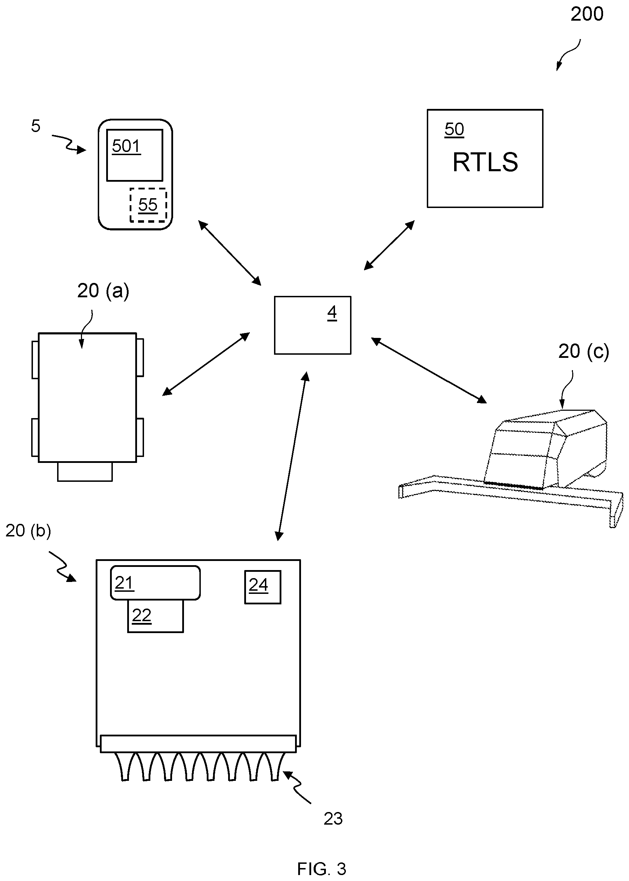

This disclosure proposes using information, of real-time positions, provided by an RTLS for livestock management. Fig. 3 is a conceptual illustration of a livestock management system 200, where the proposed technique can be implemented. The illustrated livestock management system 200 comprises, a livestock management server 4, an RTLS 50, a plurality of mobile agricultural devices 20 and a user device 5. For simplicity only three mobile agricultural devices 20, more specifically a feed wagon 20 (a), a feed pusher 20 (b) and a cleaning robot 20 (c) (more specifically a manure robot) are illustrated. It may be appreciated that the proposed technique is typically intended for applications in larger livestock areas than the one illustrated in Fig. 1 where many more mobile agricultural devices 20 operate, which typically makes a (manual) management of the mobile agricultural devices 20 more complicated.

For better understanding of the proposed control arrangement, one of the mobile agricultural devices 20 i.e. the feed pusher 20 (b) will be described in further detail. The illustrated feed pusher 20 (b) comprises a feed pushing and remixing mechanism 23 configured to push and remix feed at the feed table 32 in the livestock area. In the illustrated example the feed pushing and remixing mechanism 23 comprises a rotating auger. The rotating auger lifts, mixes, and aerates the feed while pushing/repositioning feed closer to the feeding fence 33 (Fig. 1). However, the feed pushing and remixing mechanism 23 may alternatively comprise a barrel, a skirt or some other kind of feed pushing mechanism.

In addition to the feed pushing and remixing mechanism 23, the feed pusher 20 (b) comprises a propulsion device 21, a power storage 22 and control circuitry 24. It must be appreciated that the autonomous feed pusher 20 (b) also comprises further components not illustrated in Fig. 3, such as components for steering, braking and charging the autonomous feed pusher 20 (b) and sensors used for the autonomous control. However, for simplicity only components related to the proposed control are described herein.

The propulsion device 21 is configured to propel the autonomous feed pusher 20 (b). More specifically, the propulsion device 21 is configured to convert energy provided by the power storage 22 into mechanical force. The propulsion device 21 is for example an electric motor. The power storage 22 is configured to supply energy to the propulsion device 21. The power storage 22 is for example a battery.

The power storage 22 is typically charged by a docking station (not shown) where the autonomous feed pusher 20 (b) may be parked between the feeding sessions.

The control circuit 24 is configured to autonomously operate the autonomous feed pusher 20 (b) along, around and/or at one or several feeding place(s). This typically involves propelling, braking and steering the autonomous feed pusher 20 (b). The control circuitry 24 may also be configured to control the feed pushing and remixing mechanism 23. For example, the feed pushing and remixing mechanism 23 is activated or inactivated. The control arrangement also involves tracking the position of the autonomous feed pusher 20 (b) using RTLS. The position may also be tracked using calculations in combination with data from different sensors such as optical sensors, wireless sensors etc. The control arrangement is hereby using the RTLS and preferably also sensors in the control circuitry 24 to detect obstacles (for example other mobile agricultural devices, humans or animals) in the route and to control the autonomous feed pusher 20 (b) to avoid such obstacles. In particular the control circuitry 24 is configured to control the propulsion device 21 to propel the autonomous feed pusher 20 (b), wherein the illustrated control circuitry 24 also comprises a communication interface. The communication interface is configured for communication of signals and/or data between the control circuitry 24 and a remote device of the control arrangement, such as the livestock management server 4, using any type of suitable protocol e.g. Bluetooth, IEEE 802.11 or any 3GPP protocol. The control circuitry 24 thereby receives control data from the livestock management server 4, which controls the operation of the autonomous feed pusher 20 (b) based on the positional data. Thus, some or all of the operation of the autonomous feed pusher 20 (b) may be remotely controlled by a remotely or locally arranged livestock management server 4.

Other mobile agricultural devices 20 typically operate in a similar manner. However, instead of a feed pushing and remixing mechanism 23 they comprise mechanisms or tools for performing other tasks. For example, a feed wagon 20 (a) comprises a feed delivery mechanism configured to deliver feed at a feed table and a cleaning robot 20 (c) comprises a cleaning mechanism, such as a manure scraper or a brush.

The livestock management server 4 is configured as a control unit configured to control operation in the livestock area 30. The livestock management server 4 is configured to communicate with the mobile agricultural devices 20 and with the RTLS 50. In some embodiments the RTLS 50 and the livestock management server 4 are integrated. Alternatively, they are configured to communicate using any suitable protocol such as Ethernet or IEEE 802.1.

The livestock management server 4 is configured to monitor the animals 10 in the livestock area 30. The livestock management server 4 is also configured to monitor and control a plurality of mobile agricultural devices 20. The livestock management server 4 is for example configured to determine tasks that need to be performed and to instruct the mobile agricultural devices 20 to perform the tasks.

In some embodiments, the livestock management server 4 is configured to communicate with a user via a user device 5. The user may use the user device 5 to enter user input for use by the livestock management server 4. Information may also be provided to the user via the user device 5.

In the illustrated example, the user device 5 is a smartphone. In other embodiments the user device is a laptop, tablet or any other device. The user device 5 comprises control circuitry 55 and a display 501, here a touch display on which a graphical user interface is presented. In other embodiments the user device 5 may comprise other devices for receiving user input and providing information to a user, such as a display and buttons. In some embodiments, the user device 5 comprises a software application configured to perform parts of the method proposed herein.

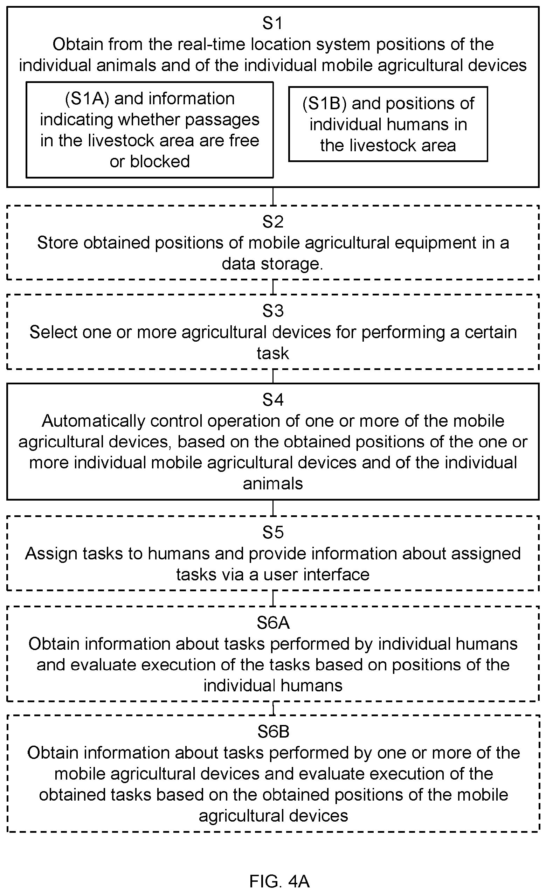

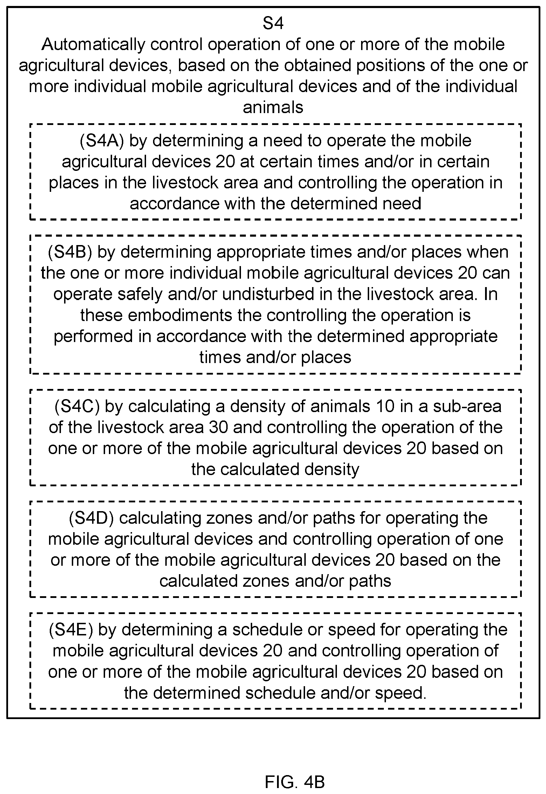

The proposed control will now be described in further detail with reference to the flow charts of Figs. 4A and 4B and the previous Figs. 1-3. Fig. 4A shows an exemplifying method for controlling operation of mobile agricultural devices 20 in a livestock area.

The method of Fig. 4A is performed by a control arrangement 100 (see Figs. 5-6). The control arrangement 100 should be seen as a functional unit and may be provided in one or distributed in several physical units, see Fig. 5 which is a conceptual illustration of the control arrangement 100. In some embodiments the control arrangement 100 comprises a livestock management server 4, which is located at the same premises as the livestock area. Alternatively, such a server 4 may be remotely implemented e.g. in a computer cloud. In some embodiments, the method is at least partly performed by control circuitry 23 of the mobile agricultural devices 20 or in control circuitry 55 of user devices 5 carried by humans in the livestock area 30.

The method may be implemented as a computer program comprising instructions which, when the program is executed by a computer (e.g. a processor in the control circuitry), cause the computer to carry out the method. According to some embodiments the computer program is stored in a computer-readable medium (e.g. a memory or a compact disc) that comprises instructions which, when executed by a computer, cause the computer to carry out the method.

When performing a task in the livestock area 30 the mobile agricultural device 20 is typically operated according to an operation plan. The operating plan comprises a task and trajectory. Thus, the trajectory defines a route or path which defines where the mobile agricultural device 20 should drive to perform the task and a corresponding velocity i.e. speed and travel direction. The control arrangement 100 is preferably configured to hereby provide a schedule that defines when and where the mobile agricultural devices 20 should start operating along a specific trajectory. As an alternative, sessions may be triggered for example by a user that wants to initiate a certain task, e.g. via the mobile device 5.

The proposed method relates to automatically controlling operation of one or more of the mobile agricultural devices 20. This may be done either before starting the task by determining (or updating) a trajectory or schedule. Alternatively, it may be done while performing the task, by modifying the trajectory. A combination is also possible as will be explained below.

The proposed method may be used with different types of mobile agricultural devices 20. For example, the method may be used with mobile agricultural devices 20 configured to perform different cleaning activities (such as manure scraping or washing), deliver new feed and/or to push/remix feed that is already present on the feed table. In other words, the mobile agricultural device 20 can be a manure cleaning robot, an autonomous feed wagon/feed pusher or a similar autonomous mobile robot.

The first time a mobile agricultural device 20 is put into use in a livestock area 30 it may be programmed with an initial operation plan. Such an operation plan comprises a trajectory and possibly also a schedule. The trajectory and schedule can be pre-programmed by the manufacturer.

As mentioned above, the proposed method/control arrangement is based on the insight that data about how animals 10 and agricultural mobile devices 20 move within the livestock area 30 can be used to determine how and when to perform agricultural tasks. In other words, the method comprises obtaining S1, from the RTLS 50 positions of the individual animals 10 and of the individual mobile agricultural devices 20 in the livestock area 30. The positions received from the RTLS 50 are individual instantaneous positions of the individual animals 10 and of the individual mobile agricultural devices 20 at certain times. This information can be used to analyse how animals are moving in the livestock area 30 and consequently it also enables determining when and how different tasks need to and can be performed as will be further described below.

The RTLS 50 may also be configured to provide position information associated with stationary devices 70 that have moving parts, such as gates and bars. This information can be used to determine whether a gate or bar is open or closed, such that animals 10 or mobile agricultural devices 20 can pass through an opening blocked by the gate or bar. In other words, in some embodiments the obtaining S1 comprises obtaining S1A information indicating whether passages in the livestock area are free or blocked.

Additionally, the control arrangement 100 using the RTLS 50 may be configured to provide information about positions of humans, such as staff or visitors, in the livestock area. Hence, in some embodiments the obtaining S1 comprises obtaining S1B, from the RTLS 50, positions of the individual humans 40 in the livestock area.

Operation of one or more of the mobile agricultural devices 20 can be performed both based on real-time positions and on historical positions of objects in the livestock area 30. However, the RTLS 50 typically provides positions in real-time. To be able to analyse historical positions, data needs to be stored in a data storage 102 (Fig 5). Hence, in some embodiments the method comprises storing S2 the obtained one or more positions of the individual mobile agricultural devices 20 in a data storage 102 (Fig. 6). Hence, in the following obtained positions may refer to either real-time or historical positions, or a combination thereof.

In some scenarios there may be several mobile agricultural devices 20 that can (i.e. are able to) perform a certain task. In such a situation one mobile agricultural device 20 may be selected based on for example its current position. For example, the mobile agricultural device 20 that will have the shortest path to travel to perform the task is selected. In other words, in some embodiments the method comprises selecting S3 one or more agricultural devices 20 for performing a certain task based on the obtained positions of the one or more individual mobile agricultural devices 20 and of the individual animals 10.

The method further comprises automatically controlling S4 operation of one or more of the mobile agricultural devices 20, based on the obtained positions of the one or more individual mobile agricultural devices 20 and of the individual animals 10. There are many different ways to control S4 operation based on RTLS data in order to improve efficiency and increase safety. A plurality of different possibilities that can be used in any combination will now be presented with reference to Fig. 4B, which illustrates the step of controlling S4 operation in more detail.

There are two aspects of this, namely how to use the data and how to implement the control. How the positions retrieved from the RTLS 50 may be utilised in different ways to improve livestock management will first be explained.

One way to increase efficiency in livestock management is to use the obtained positions to determine when and where tasks need to be performed. For example, historical presence of many animals may indicate a need for cleaning. In other words, in some embodiments the controlling S4 operation comprises determining S4A based on the obtained positions of the individual animals 10 and/or individual mobile agricultural devices 20, a need to operate the mobile agricultural devices 20 at certain times and/or in certain places in the livestock area. For example, if more than a predefined number of animals 10 has been present in a certain sub-area or zone of the livestock area 30, then "need" to perform a task (e.g. cleaning) is triggered. Alternatively, if the density of animals 10 has exceeded a threshold for a certain time then "need" to perform the task is valid. In these embodiments the controlling S4 of the operation is then performed in accordance with the determined need.

Alternatively, positions of animals are used to prevent that the mobile agricultural device 20 collides with objects along its trajectory. Even if mobile agricultural devices 20 typically have a sensor-based security system that detects objects in its path, the tasks will of course be performed more efficiently if the mobile agricultural device 20 can perform its task with as few stops as possible (e.g. caused by an animal). Hence, information about when and where animals 10 generally reside can be used to determine when and where to perform sessions. This may also work as a redundant security system and may also reduce animal stress as mobile agricultural devices 20 can be operated at substantial distance from the animals 10. In other words, in some embodiments the controlling S4 operation comprises determining S4B based on the obtained positions of the individual animals 10 and/or individual mobile agricultural devices 20, appropriate times and/or places when the one or more individual mobile agricultural devices 20 can operate safely and/or undisturbed in the livestock area. In these embodiments the controlling S4 of the operation is performed in accordance with the determined appropriate times and/or places.

Density of animals in different sub-areas of the livestock area is one parameter that can be used to detect a need or appropriate times and/or places. The sub-areas may be predefined zones, such as alleys, rooms, feeding places etc. Alternatively, sub-areas may be dynamically determined to represent different densities of animals, i.e. a count of animals per area unit (e.g. no. animals per m2). In other words, in some embodiments the controlling S4 operation comprises calculating S4C, based on the obtained positions of individual animals, a density of animals 10 in a sub-area of the livestock area 30 and controlling the operation of the one or more of the mobile agricultural devices 20 based on the calculated density. For example, if a feed wagon 20 (a) is automatically operated, the system can increase the number of deliveries when many animals are present at a certain feeding place 32 and a feed pusher 20 (b) may in addition be controlled to pass more times at that particular feeding place 32. In this way (a large farm that has) several different feeding places 32 that are served by one feed wagon 20 (a) and one feed pusher 20 (b), each feeding place 32 is automatically served differently depending on the number of animals 10 that are present at each feeding place 32 (e.g. in a zone associated with the feeding place 32). In this way the system can be controlled to automatically adapt (in real-time) to the number of animals 10 present in the various sub-areas.

If automatic cleaning is used in the livestock area 30, the fact that there are right now (real-time data) relatively few animals 10 in a certain sub-area (i.e. density below a threshold) may trigger a cleaning robot 20 (c) to drive through that area, as it is typically more efficient and safer to clean with few animals 10 around. Historical data on the animals 10 is hereby also beneficially used. For example, that many animals have recently been in a certain sub-area and that it is therefore likely to be dirty.

The data form the RTL 50 may also, as mentioned above, be used to avoid collisions. In these embodiments, relative distances between animals and mobile agricultural devices 20 can be monitored and analysed. In some embodiments relative distances are analysed in real time. Hence, a mobile agricultural device 20 heading towards a group of animals may be automatically reprogrammed to take another route, if possible. Alternatively, a trajectory that is operated according to a schedule may be modified if an analysis of relative distance reveals that during previous sessions the mobile agricultural devices 20 drove close to many animals and maybe even had to stop and bypass animals 10. Stated differently, in some embodiments the operating comprises controlling the operation of the one or more of the mobile agricultural devices 20 based on one or more relative distances between the one or more individual mobile agricultural devices 20 and of the individual animals 10.

If the RTLS 50 is configured to provide data about stationary devices that may potentially block passages in the livestock area, then such information is of course useful when operating the mobile agricultural devices 20. In other words, in some embodiments the method comprises controlling the operation based on whether the passages are free or blocked.

If the RTLS 50 is configured to provide positions of individual humans 40 the controlling S4 operation may also be based on the obtained positions of the individual humans 40, as will be further explained below. For example, mobile agricultural devices 20 are controlled to be operated where there are few or no people present.

There are many different ways to implement the actual control (i.e. adjusting the driving) of the mobile agricultural device 20 based on positions in order to improve efficiency and increase safety. One way to do this is to calculate or modify a trajectory of a mobile agricultural device 20 based on the animals' (or staff) positions. Stated differently, the positions obtained from the RTLS 50 are used to determine where the mobile agricultural device 20 shall drive. In other words, in some embodiments the controlling S4 operation comprises calculating S4D zones and/or paths for operating the mobile agricultural devices 20 based on the obtained positions of the individual mobile agricultural devices 20 and/or animals 10 and controlling operation of one or more of the mobile agricultural devices 20 based on the calculated zones and/or paths. For example, forbidden areas may be dynamically created in real time. A forbidden area may be a place where there are many animals, where a building work is performed, where there are obstacles, where gates are closed, or where humans are temporarily located. For example, when a gate is closed, an area behind the gate will be changed to "unallowed" and the mobile agricultural vehicle 20 will not try to drive there. This may trigger paths to be changed to avoid this area. In other words, in some embodiments, the calculated zones comprise temporarily unallowed zones where one or more individual mobile agricultural devices 20 are temporarily unallowed to drive and/or allowed zones. The zones may constitute virtual fences for mobile agricultural devices 20. There may be different zones at different times. This would work similarly as a wire in the lawn defining an area where a mower robot lawn shall operate.

Another way to perform the actual controlling S4 is to determine or modify a schedule or speed of the mobile agricultural device 20 based on the obtained positions. For example, if the positions obtained from the RTLS 50 reveals that many animals 10 have resided in a certain sub-area, a new cleaning or feed distribution session may be triggered to ensure that the sub-area is clean or that there is enough feed. Alternatively, a schedule may be changed to clean this sub-area more often. Alternatively, if the positions obtained from the RTLS 50 reveals that many animals 10 are present in a certain sub-area, then the schedule may be changed to clean this sub-area at a later point in time in order to avoid accidents. Also the speed of the mobile agricultural device 20 may be adapted such that it drives faster if the density of animals 10 is low, e.g. below a certain threshold. Alternatively, speed may be adjusted dynamically based on animal's positions in real-time. In this way, accidents are mitigated, and the animals will typically be less stressed. Stated differently, in some embodiments the controlling S4 operation comprises determining S4E a schedule or speed for operating the mobile agricultural devices 20 based on the obtained positions of the individual mobile agricultural devices 20 and/or animals 10 and controlling operation of one or more of the mobile agricultural devices 20 based on the determined schedule and/or speed.

Now turning back to Fig. 4A. Even when a livestock area is automatically managed using mobile agricultural devices 20, as explained above, there might be a need to perform certain tasks manually. In some embodiments, the method comprises identifying such tasks and informing a user e.g. a farmer about such tasks. In other words, the method is assigning S5 tasks to humans and providing information about assigned tasks via a user interface. For example, a user is informed about tasks that needs to be manually performed via an application in a user device 5, such as a smartphone. A certain human 40 may be selected for performing the task, based on the human's position in the livestock area 30.

The positions obtained from the RTLS 50 may also be used to evaluate tasks performed by the mobile agricultural device 20 and/or by humans 40. In some embodiments the method comprises obtaining S6A information about tasks performed by individual humans 40 and evaluating execution of the tasks based on positions of the individual humans. In some embodiments the method comprises obtaining S6B information about one or more tasks performed by one or more of the mobile agricultural devices 20 and evaluating execution of the tasks based on the obtained positions of the one or more individual mobile agricultural devices 20. Each task is typically associated by a route that the mobile agricultural device 20 or human has to travel (e.g. drive or walk) to perform the task. When a human 40 has performed a task this is typically manually verified by the user verifying the completion of the task via a user interface e.g. in the same user device 5 that was used to assign the task. A mobile agricultural device 20 may on the other hand be prevented from performing a task due to e.g. lack of power, obstacles etc. Hence, sometimes additional verification is desirable. For example, it is possible to verify that the feeding wagon 20 (a) has driven to the feeding place 32.

By analysing the movement of the mobile agricultural device 20 and/or human it is possible to get an indication about whether the task has been performed or not. Stated differently, the method comprises the step of obtaining information about expected movement of the mobile agricultural devices 20 and/or the individual humans 40 while performing the tasks and an evaluation of the tasks by comparing the obtained positions of the one or more individual mobile agricultural devices 20 and/or of the individual humans with the expected movement.

The disclosure also relates to a corresponding control arrangement 100 configured to control operation of mobile agricultural devices 20 in a livestock area 30, such as the livestock area of Fig. 1.

The control arrangement 100 is herein described with reference to the livestock management server 4. However, it must be appreciated that the control circuitry may alternatively be implemented, at least partly, outside the livestock management server 4. For example, the control arrangement 100 is distributed among several units as illustrated in Fig. 5. In other words, in some embodiments the control arrangement 100 comprises a livestock management server 4, control circuitry 23 located on the mobile agricultural devices 20 and/or control circuitry 55 of user devices 5.

Fig. 6 illustrates the components of a control arrangement 100 in more detail, according to some embodiments. The control arrangement 100 comprises hardware and software. The hardware in the control arrangement is for example various electronic components on a for example a Printed Circuit Board, PCB. The most important of those components is typically a processor 101 e.g. a microprocessor, along with a memory 102 e.g. EPROM or a Flash memory chip, in the control arrangement (unit). The software is typically software code that runs in the processor. The illustrated control arrangement (unit) 100 also comprises a communication interface 103. The communication interface 103 is configured for communication of signals and/or data between the control arrangement (unit) 100 and other devices, such as the mobile agricultural devices 20 and the RTLS 50.

The control arrangement (unit) 100, or more specifically the processor 101 of the control arrangement (unit) 100, is configured to cause the control arrangement (unit) 100 to perform all aspects of the method described in Fig. 4A and 4B. This is typically done by running computer program code stored in the memory 102 in the processor 101 of the control arrangement (unit) 100.

More specifically the control arrangement 100 is configured to obtain from the real-time location system 50, positions of individual animals 10 and of individual mobile agricultural devices 20 located in the livestock area 30 and to automatically control operation of one or more of the mobile agricultural devices 20, based on the obtained positions of the one or more individual mobile agricultural devices 20 and of the individual animals 10.

In the shown embodiment, the control arrangement 100 is configured to determine, based on the obtained positions of the individual animals 10 and/or individual mobile agricultural devices 20, a need to operate the mobile agricultural devices 20 at certain times and/or in certain places in the livestock area to control the operation in accordance with the determined need.

Furthermore, the control arrangement is hereby configured to determine based on the obtained positions of the individual animals 10 and/or individual mobile agricultural devices 20, appropriate times and/or places when the one or more individual mobile agricultural devices 20 can operate safely and/or undisturbed in the livestock area and to control the operation in accordance with the appropriate times and/or places.

The control arrangement 100 of the embodiment is also configured to select one or more agricultural devices 20 for performing a certain task based on the obtained positions of the one or more individual mobile agricultural devices 20 and/or of the individual animals 10.

In the embodiment, the control arrangement 100 is furthermore configured to calculate, based on the obtained positions of individual animals, a density of animals 10 in a sub-area of the livestock area 30 and to control the operation of the one or more of the mobile agricultural devices 20 based on the calculated density.

In some embodiments, the control arrangement is configured to control the operation of the one or more of the mobile agricultural devices 20 based on one or more relative distances between the one or more individual mobile agricultural devices 20 and of the individual animals 10.

In the detailed embodiment, the control arrangement is configured to store the obtained positions of the individual mobile agricultural devices 20 and/or animals 10 in a data storage and to control the operation based on historical positions of the individual mobile agricultural devices 20 and/or individual animals 10.

In the embodiment, the control arrangement 100 is further configured to determine a schedule or speed for operating the mobile agricultural devices 20 based on the obtained positions of the individual mobile agricultural devices 20 and/or animals 10 and to control the operation based on the determined schedule and/or speed.

In some embodiments, the control arrangement is configured to calculate zones and/or paths for operating the mobile agricultural devices 20 based on the obtained positions of the individual mobile agricultural devices 20 and/or animals 10 and to control the operation based on the calculated zones and/or paths. In some embodiments, the calculated zones comprise temporarily unallowed zones where one or more individual mobile agricultural devices 20 are temporarily unallowed to drive and/or allowed zones.

In some embodiments, the control arrangement is configured to obtain information indicating whether passages in the livestock area are free or blocked and wherein the control arrangement is configured to control the operation based on whether the passages are free or blocked.

In some embodiments, the control arrangement is configured to assign tasks to humans and to provide information about assigned tasks via a user interface.

In some embodiments, the control arrangement is configured to obtain, from the RTLS 50, positions of the individual humans 40 in the livestock area and to control the operation based on the obtained positions of the individual humans 40.

In some embodiments, in the control arrangement is configured to obtain information about tasks performed by individual humans 40 and to evaluate execution of the tasks based on positions of the individual humans.

In some embodiments, the control arrangement is configured to obtain information about tasks performed by the one or more mobile agricultural device 20 and to evaluate execution of the tasks based on the obtained positions of the one or more individual mobile agricultural devices 20.

In some embodiments, the control arrangement is configured to obtain information about expected movement of the mobile agricultural devices 20 and/or the individual humans 40 while performing the tasks and to evaluate the tasks by comparing the obtained positions of the one or more individual mobile agricultural devices 20 and/or of the individual humans with the expected movement.

The terminology used in the description of the embodiments as illustrated in the accompanying drawings is not intended to be limiting of the described method; control arrangement 100 or computer program. Various changes, substitutions and/or alterations may be made, without departing from disclosure embodiments as defined by the appended claims.

The term "or" as used herein, is to be interpreted as a mathematical OR, i.e., as an inclusive disjunction; not as a mathematical exclusive OR (XOR), unless expressly stated otherwise. In addition, the singular forms "a", "an" and "the" are to be interpreted as "at least one", thus also possibly comprising a plurality of entities of the same kind, unless expressly stated otherwise. It will be further understood that the terms "includes", "comprises", "including" and/ or "comprising", specifies the presence of stated features, actions, integers, steps, operations, elements, and/or components, but do not preclude the presence or addition of one or more other features, actions, integers, steps, operations, elements, components, and/or groups thereof. A single unit such as e.g. a processor may fulfil the functions of several items recited in the claims.

## Claims

1. A control arrangement (100) configured to control operation of a plurality of mobile agricultural devices (20) in a livestock area (30), wherein a real-time location system, RTLS (50), is arranged in the livestock area (30) to track locations of objects located in the livestock area (30) in real-time, the control arrangement (100) being configured:
- to obtain, from the real-time location system (50), positions of individual animals (10) and of each one of the plurality of mobile agricultural devices (20) located in the livestock area (30), and
- to automatically control operation of one or more of the plurality of mobile agricultural devices (20), based on the obtained positions of each one of the plurality of mobile agricultural devices (20) and of the individual animals (10).

2. The control arrangement (100) according to claim 1, wherein the control arrangement (100) is configured to determine, based on the obtained positions of the individual animals (10) and/or of each one of the plurality of mobile agricultural devices (20), a need to operate one or more of the plurality of mobile agricultural devices (20) at certain times and/or in certain places in the livestock area to control the operation in accordance with the determined need.

3. The control arrangement (100) according to claim 1 or 2, wherein the control arrangement is configured to determine based on the obtained positions of the individual animals (10) and/or each one of the plurality of mobile agricultural devices (20), appropriate times and/or places when one or more of the plurality of mobile agricultural devices (20) can operate safely and/or undisturbed in the livestock area and to control the operation in accordance with the appropriate times and/or places.

4. The control arrangement (100) according to any of the proceeding claims, wherein the control arrangement (100) is configured:
- to select one or more of the plurality of mobile agricultural devices (20) for performing a certain task based on the obtained positions of each one of the plurality of mobile agricultural devices (20) and/or of the individual animals (10).

5. The control arrangement (100) according to any of the proceeding claims, wherein the control arrangement (100) is configured to calculate, based on the obtained positions of individual animals, a density of animals (10) in a sub-area of the livestock area (30) and to control the operation of one or more of the plurality of mobile agricultural devices (20) based on the calculated density.

6. The control arrangement (100) according to any of the proceeding claims, wherein the control arrangement is configured to control the operation of one or more of the plurality of mobile agricultural devices (20) based on one or more relative distances between each one of the plurality of mobile agricultural devices (20) and of the individual animals (10).

7. The control arrangement (100) according to any of the proceeding claims, wherein the control arrangement is configured to store the obtained positions of each one of the plurality of mobile agricultural devices (20) and/or animals (10) in a data storage and to control the operation based on historical positions of each one of the plurality of mobile agricultural devices (20) and/or individual animals (10).

8. The control arrangement (100) according to any of the proceeding claims, wherein the control arrangement (100) is configured to determine a schedule or speed for operating one or more of the plurality of mobile agricultural devices (20) based on the obtained positions of each one of the plurality of mobile agricultural devices (20) and/or animals (10) and to control the operation based on the determined schedule and/or speed.

9. The control arrangement (100) according to any of the proceeding claims, wherein the control arrangement is configured to calculate zones and/or paths for operating one or more of the plurality of the mobile agricultural devices (20) based on the obtained positions of each one of the plurality of mobile agricultural devices (20) and/or animals (10) and to control the operation based on the calculated zones and/or paths.

10. The control arrangement (100) of claim 9, wherein the calculated zones comprise temporarily unallowed zones where one or more of the plurality of mobile agricultural devices (20) are temporarily unallowed to drive and/or allowed zones.

11. The control arrangement (100) of any of the proceeding claims, wherein the control arrangement is configured to obtain information indicating whether passages in the livestock area are free or blocked and wherein the control arrangement is configured to control the operation based on whether the passages are free or blocked.

12. The control arrangement (100) of any of the proceeding claims, wherein the control arrangement is configured to assign tasks to humans and to provide information about assigned tasks via a user interface.

13. The control arrangement (100) of any of the proceeding claims, wherein the control arrangement is configured to obtain, from the RTLS (50), positions of individual humans (40) in the livestock area and to control the operation based on the obtained positions of the individual humans (40).

14. The control arrangement (100) of claim 12, wherein the control arrangement is configured to obtain information about tasks performed by individual humans (40) and to evaluate execution of the tasks based on positions of the individual humans.

15. The control arrangement (100) of any of the proceeding claims, wherein the control arrangement is configured to obtain information about tasks performed by each one of the plurality of mobile agricultural device (20) and to evaluate execution of the tasks based on the obtained positions of each one of the plurality of mobile agricultural devices (20).

16. The control arrangement (100) according to claim 14 or 15, wherein control arrangement is configured to obtain information about expected movement of each one of the plurality of mobile agricultural devices (20) and/or the individual humans (40) while performing the tasks and to evaluate the tasks by comparing the obtained positions of each one of the plurality of mobile agricultural devices (20) and/or of the individual humans with the expected movement.

17. The control arrangement (100) of any of the proceeding claims, wherein the plurality of mobile agricultural devices (20) comprise one or more of agricultural robots, wagons, feeders.

18. A method for controlling operation of a plurality of mobile agricultural devices (20) in a livestock area, wherein a real-time location system, RTLS (60), is arranged in the livestock area (30) to track locations of objects located in the livestock area (30) in real-time, the method comprising:
- obtaining (S1), from the RTLS (50), positions of the individual animals (10) and of each one of the plurality of mobile agricultural devices (20) in the livestock area (30), and
- automatically controlling (S4) operation of one or more of the plurality of mobile agricultural devices (20), based on the obtained positions of each one of the plurality of mobile agricultural devices (20) and of the individual animals (10).

## Patentansprüche

1. Steueranordnung (100), die konfiguriert ist, um den Betrieb einer Vielzahl von mobilen landwirtschaftlichen Vorrichtungen (20) in einem Viehbereich (30) zu steuern, wobei ein Echtzeit-Ortungssystem (RTLS) (50) in dem Viehbereich (30) angeordnet ist, um Standorte von in dem Viehbereich (30) befindlichen Objekten in Echtzeit zu verfolgen, wobei die Steueranordnung (100) konfiguriert ist:
- um von dem Echtzeit-Ortungssystem (50) Positionen einzelner Tiere (10) und jeder der Vielzahl von mobilen landwirtschaftlichen Vorrichtungen (20), die sich in dem Viehbereich (30) befinden, zu erhalten, und
- um den Betrieb einer oder mehrerer der Vielzahl von mobilen landwirtschaftlichen Vorrichtungen (20) automatisch zu steuern, basierend auf den erhaltenen Positionen von jeder der Vielzahl von mobilen landwirtschaftlichen Vorrichtungen (20) und der einzelnen Tiere (10).

2. Steueranordnung (100) nach Anspruch 1, wobei die Steueranordnung (100) konfiguriert ist, um basierend auf den erhaltenen Positionen der einzelnen Tiere (10) und/oder von jeder der Vielzahl von mobilen landwirtschaftlichen Vorrichtungen (20) einen Bedarf zu bestimmen, eine oder mehrere der Vielzahl von mobilen landwirtschaftlichen Vorrichtungen (20) zu bestimmten Zeiten und/oder an bestimmten Orten in dem Viehbereich zu betreiben, um den Betrieb gemäß dem bestimmten Bedarf zu steuern.

3. Steueranordnung (100) nach Anspruch 1 oder 2, wobei die Steueranordnung konfiguriert ist, um basierend auf den erhaltenen Positionen der einzelnen Tiere (10) und/oder jeder der Vielzahl von mobilen landwirtschaftlichen Vorrichtungen (20) geeignete Zeiten und/oder Orte zu bestimmen, wann eine oder mehrere der Vielzahl von mobilen landwirtschaftlichen Vorrichtungen (20) sicher und/oder ungestört in dem Viehbereich arbeiten können, und den Betrieb gemäß den geeigneten Zeiten und/oder Orten zu steuern.

4. Steueranordnung (100) nach einem der vorstehenden Ansprüche, wobei die Steueranordnung (100) konfiguriert ist:
- um eine oder mehrere der Vielzahl von mobilen landwirtschaftlichen Vorrichtungen (20) zur Durchführung einer bestimmten Aufgabe basierend auf den erhaltenen Positionen von jeder der Vielzahl von mobilen landwirtschaftlichen Vorrichtungen (20) und/oder der einzelnen Tiere (10) auszuwählen.

5. Steueranordnung (100) nach einem der vorstehenden Ansprüche, wobei die Steueranordnung (100) konfiguriert ist, um basierend auf den erhaltenen Positionen einzelner Tiere eine Dichte von Tieren (10) in einem Teilbereich des Viehbereichs (30) zu berechnen und den Betrieb einer oder mehrerer der Vielzahl von mobilen landwirtschaftlichen Vorrichtungen (20) basierend auf der berechneten Dichte zu steuern.

6. Steueranordnung (100) nach einem der vorstehenden Ansprüche, wobei die Steueranordnung konfiguriert ist, um den Betrieb einer oder mehrerer der Vielzahl von mobilen landwirtschaftlichen Vorrichtungen (20) basierend auf einem oder mehreren relativen Abständen zwischen jeder der Vielzahl von mobilen landwirtschaftlichen Vorrichtungen (20) und der einzelnen Tiere (10) zu steuern.

7. Steueranordnung (100) nach einem der vorstehenden Ansprüche, wobei die Steueranordnung konfiguriert ist, um die erhaltenen Positionen von jeder der Vielzahl von mobilen landwirtschaftlichen Vorrichtungen (20) und/oder den Tieren (10) in einem Datenspeicher zu speichern und den Betrieb basierend auf historischen Positionen von jeder der Vielzahl von mobilen landwirtschaftlichen Vorrichtungen (20) und/oder den einzelnen Tieren (10) zu steuern.

8. Steueranordnung (100) nach einem der vorstehenden Ansprüche, wobei die Steueranordnung (100) konfiguriert ist, um einen Zeitplan oder eine Geschwindigkeit zum Betreiben einer oder mehrerer der Vielzahl von mobilen landwirtschaftlichen Vorrichtungen (20) basierend auf den erhaltenen Positionen von jeder der Vielzahl von mobilen landwirtschaftlichen Vorrichtungen (20) und/oder den Tieren (10) zu bestimmen und den Betrieb basierend auf dem bestimmten Zeitplan und/oder der bestimmten Geschwindigkeit zu steuern.

9. Steueranordnung (100) nach einem der vorstehenden Ansprüche, wobei die Steueranordnung konfiguriert ist, um Zonen und/oder Pfade zum Betreiben einer oder mehrerer der Vielzahl der mobilen landwirtschaftlichen Vorrichtungen (20) basierend auf den erhaltenen Positionen von jeder der Vielzahl von mobilen landwirtschaftlichen Vorrichtungen (20) und/oder den Tieren (10) zu berechnen und den Betrieb basierend auf den berechneten Zonen und/oder Pfaden zu steuern.

10. Steueranordnung (100) nach Anspruch 9, wobei die berechneten Zonen temporär nicht erlaubte Zonen, in denen eine oder mehrere der Vielzahl von mobilen landwirtschaftlichen Vorrichtungen (20) temporär nicht fahren dürfen, und/oder erlaubte Zonen umfassen.

11. Steueranordnung (100) nach einem der vorstehenden Ansprüche, wobei die Steueranordnung konfiguriert ist, um Informationen zu erhalten, die anzeigen, ob Durchgänge in dem Viehbereich frei oder blockiert sind, und wobei die Steueranordnung konfiguriert ist, um den Betrieb basierend darauf zu steuern, ob die Durchgänge frei oder blockiert sind.

12. Steueranordnung (100) nach einem der vorstehenden Ansprüche, wobei die Steueranordnung konfiguriert ist, um Menschen Aufgaben zuzuweisen und Informationen über zugewiesene Aufgaben über eine Bedienerschnittstelle bereitzustellen.

13. Steueranordnung (100) nach einem der vorstehenden Ansprüche, wobei die Steueranordnung konfiguriert ist, um von dem RTLS (50) Positionen einzelner Menschen (40) in dem Viehbereich zu erhalten und den Betrieb basierend auf den erhaltenen Positionen der einzelnen Menschen (40) zu steuern.

14. Steueranordnung (100) nach Anspruch 12, wobei die Steueranordnung konfiguriert ist, um Informationen über von einzelnen Menschen (40) durchgeführte Aufgaben zu erhalten und um die Ausführung der Aufgaben basierend auf Positionen der einzelnen Menschen zu bewerten.

15. Steueranordnung (100) nach einem der vorstehenden Ansprüche, wobei die Steueranordnung konfiguriert ist, um Informationen über Aufgaben zu erhalten, die von jeder der Vielzahl von mobilen landwirtschaftlichen Vorrichtungen (20) durchgeführt werden, und die Ausführung der Aufgaben basierend auf den erhaltenen Positionen jeder der Vielzahl von mobilen landwirtschaftlichen Vorrichtungen (20) zu bewerten.

16. Steueranordnung (100) nach Anspruch 14 oder 15, wobei die Steueranordnung konfiguriert ist, um Informationen über eine erwartete Bewegung von jeder der Vielzahl von mobilen landwirtschaftlichen Vorrichtungen (20) und/oder der einzelnen Menschen (40) während der Durchführung der Aufgaben zu erhalten und um die Aufgaben durch Vergleichen der erhaltenen Positionen von jeder der Vielzahl von mobilen landwirtschaftlichen Vorrichtungen (20) und/oder der einzelnen Menschen mit der erwarteten Bewegung zu bewerten.

17. Steueranordnung (100) nach einem der vorstehenden Ansprüche, wobei die Vielzahl von mobilen landwirtschaftlichen Vorrichtungen (20) eine(n) oder mehrere von landwirtschaftlichen Robotern, Wagen, Fütterungsvorrichtungen umfassen.

18. Verfahren zum Steuern des Betriebs einer Vielzahl von mobilen landwirtschaftlichen Vorrichtungen (20) in einem Viehbereich, wobei ein Echtzeit-Ortungssystem (RTLS) (60) in dem Viehbereich (30) angeordnet ist, um Standorte von in dem Viehbereich (30) befindlichen Objekten in Echtzeit zu verfolgen, wobei das Verfahren umfasst:
- Erhalten (S1), von dem RTLS (50), von Positionen der einzelnen Tiere (10) und von jeder der Vielzahl von mobilen landwirtschaftlichen Vorrichtungen (20) in dem Viehbereich (30), und
- automatisches Steuern (S4) des Betriebs einer oder mehrerer der Vielzahl von mobilen landwirtschaftlichen Vorrichtungen (20), basierend auf den erhaltenen Positionen jeder der Vielzahl von mobilen landwirtschaftlichen Vorrichtungen (20) und der einzelnen Tiere (10).

## Revendications

1. Agencement de commande (100) configuré pour commander le fonctionnement d'une pluralité de dispositifs agricoles mobiles (20) dans une zone d'élevage (30), dans lequel un système de localisation en temps réel, RTLS (50), est agencé dans la zone d'élevage (30) pour suivre des localisations d'objets localisés dans la zone d'élevage (30) en temps réel, l'agencement de commande (100) étant configuré :
- pour obtenir, auprès du système de localisation en temps réel (50), des positions d'animaux individuels (10) et de chacun parmi la pluralité de dispositifs agricoles mobiles (20) localisés dans la zone d'élevage (30), et
- pour commander automatiquement le fonctionnement d'un ou plusieurs parmi la pluralité de dispositifs agricoles mobiles (20), en fonction des positions obtenues de chacun parmi la pluralité de dispositifs agricoles mobiles (20) et des animaux individuels (10).

2. Agencement de commande (100) selon la revendication 1, dans lequel l'agencement de commande (100) est configuré pour déterminer, en fonction des positions obtenues des animaux individuels (10) et/ou de chacun parmi la pluralité de dispositifs agricoles mobiles (20), un besoin de faire fonctionner un ou plusieurs parmi la pluralité de dispositifs agricoles mobiles (20) à certains moments et/ou dans certains endroits dans la zone d'élevage pour commander le fonctionnement conformément au besoin déterminé.

3. Agencement de commande (100) selon la revendication 1 ou 2, dans lequel l'agencement de commande est configuré pour déterminer en fonction des positions obtenues des animaux individuels (10) et/ou de chacun parmi la pluralité de dispositifs agricoles mobiles (20), des moments et/ou endroits appropriés où un ou plusieurs parmi la pluralité de dispositifs agricoles mobiles (20) peuvent fonctionner de façon sûre et/ou non perturbés dans la zone d'élevage et pour commander le fonctionnement conformément aux moments et/ou endroits appropriés.

4. Agencement de commande (100) selon l'une quelconque des revendications précédentes, dans lequel l'agencement de commande (100) est configuré :
- pour sélectionner un ou plusieurs parmi la pluralité de dispositifs agricoles mobiles (20) pour la mise en œuvre d'une certaine tâche en fonction des positions obtenues de chacun parmi la pluralité de dispositifs agricoles mobiles (20) et/ou des animaux individuels (10).

5. Agencement de commande (100) selon l'une quelconque des revendications précédentes, dans lequel l'agencement de commande (100) est configuré pour calculer, en fonction des positions obtenues d'animaux individuels, une densité d'animaux (10) dans une sous-zone de la zone d'élevage (30) et pour commander le fonctionnement d'un ou plusieurs parmi la pluralité de dispositifs agricoles mobiles (20) en fonction de la densité calculée.

6. Agencement de commande (100) selon l'une quelconque des revendications précédentes, dans lequel l'agencement de commande est configuré pour commander le fonctionnement d'un ou plusieurs parmi la pluralité de dispositifs agricoles mobiles (20) en fonction d'une ou plusieurs distances relatives entre chacun parmi la pluralité de dispositifs agricoles mobiles (20) et les animaux individuels (10).

7. Agencement de commande (100) selon l'une quelconque des revendications précédentes, dans lequel l'agencement de commande est configuré pour stocker les positions obtenues de chacun parmi la pluralité de dispositifs agricoles mobiles (20) et/ou des animaux (10) dans un stockage de données et pour commander le fonctionnement en fonction de positions historiques de chacun parmi la pluralité de dispositifs agricoles mobiles (20) et/ou des animaux individuels (10).

8. Agencement de commande (100) selon l'une quelconque des revendications précédentes, dans lequel l'agencement de commande (100) est configuré pour déterminer une planification ou une vitesse pour le fonctionnement d'un ou plusieurs parmi la pluralité de dispositifs agricoles mobiles (20) en fonction des positions obtenues de chacun parmi la pluralité de dispositifs agricoles mobiles (20) et/ou des animaux (10) et pour commander le fonctionnement en fonction de la planification et/ou de la vitesse déterminées.

9. Agencement de commande (100) selon l'une quelconque des revendications précédentes, dans lequel l'agencement de commande est configuré pour calculer des zones et/ou trajets pour le fonctionnement d'un ou plusieurs parmi la pluralité des dispositifs agricoles mobiles (20) en fonction des positions obtenues de chacun parmi la pluralité de dispositifs agricoles mobiles (20) et/ou des animaux (10) et pour commander le fonctionnement en fonction des zones et/ou trajets calculés.

10. Agencement de commande (100) selon la revendication 9, dans lequel les zones calculées comprennent des zones temporairement interdites où un ou plusieurs parmi la pluralité de dispositifs agricoles mobiles (20) sont temporairement interdits à la conduite et/ou des zones autorisées.

11. Agencement de commande (100) selon l'une quelconque des revendications précédentes, dans lequel l'agencement de commande est configuré pour obtenir des informations indiquant si des passages dans la zone d'élevage sont libres ou bloqués et dans lequel l'agencement de commande est configuré pour commander le fonctionnement en fonction du fait que les passages sont libres ou bloqués.

12. Agencement de commande (100) selon l'une quelconque des revendications précédentes, dans lequel l'agencement de commande est configuré pour attribuer des tâches à des humains et pour fournir des informations concernant des tâches attribuées par l'intermédiaire d'une interface utilisateur.

13. Agencement de commande (100) selon l'une quelconque des revendications précédentes, dans lequel l'agencement de commande est configuré pour obtenir, auprès du RTLS (50), des positions d'humains individuels (40) dans la zone d'élevage et pour commander le fonctionnement en fonction des positions obtenues des humains individuels (40).

14. Agencement de commande (100) selon la revendication 12, dans lequel l'agencement de commande est configuré pour obtenir des informations concernant des tâches mises en œuvre par des humains individuels (40) et pour évaluer l'exécution des tâches en fonction de positions des humains individuels.

15. Agencement de commande (100) selon l'une quelconque des revendications précédentes, dans lequel l'agencement de commande est configuré pour obtenir des informations concernant des tâches mises en œuvre par chacun parmi la pluralité de dispositifs agricoles mobiles (20) et pour évaluer l'exécution des tâches en fonction des positions obtenues de chacun parmi la pluralité de dispositifs agricoles mobiles (20).

16. Agencement de commande (100) selon la revendication 14 ou 15, dans lequel l'agencement de commande est configuré pour obtenir des informations concernant un mouvement attendu de chacun parmi la pluralité de dispositifs agricoles mobiles (20) et/ou des humains individuels (40) tout en mettant en œuvre les tâches et pour évaluer les tâches en comparant les positions obtenues de chacun parmi la pluralité de dispositifs agricoles mobiles (20) et/ou des humains individuels au mouvement attendu.

17. Agencement de commande (100) selon l'une quelconque des revendications précédentes, dans lequel la pluralité de dispositifs agricoles mobiles (20) comprennent un ou plusieurs parmi des robots agricoles, des remorques, des distributeurs d'aliments.

18. Procédé permettant de commander le fonctionnement d'une pluralité de dispositifs agricoles mobiles (20) dans une zone d'élevage, dans lequel un système de localisation en temps réel, RTLS (60), est agencé dans la zone d'élevage (30) pour suivre des localisations d'objets localisés dans la zone d'élevage (30) en temps réel, le procédé comprenant :
- l'obtention (S1), auprès du RTLS (50), de positions des animaux individuels (10) et de chacun parmi la pluralité de dispositifs agricoles mobiles (20) dans la zone d'élevage (30), et
- la commande automatique (S4) du fonctionnement d'un ou plusieurs parmi la pluralité de dispositifs agricoles mobiles (20), en fonction des positions obtenues de chacun parmi la pluralité de dispositifs agricoles mobiles (20) et des animaux individuels (10).
